# EUROPEAN PATENT APPLICATION

(11) **EP 0 549 145 A1**
(43) Date of publication of application: **30.06.1993**
(21) Application number: 92310848.4
(22) Date of filing: 27.11.1992
(51) Int. Cl.: C09D 7/00

(54) **Method for increasing the hiding power of paint**

(30) Priority: 20.12.1991 US 811766
(71) Applicant: ROHM AND HAAS COMPANY, Philadelphia Pennsylvania 19105 (US)
(72) Inventor: Fasano, David Michael, Maple Glen, Pennsylvania 19002 (US)
(74) Representative: Angell, David Whilton

(57) **Abstract**

A method for increasing the hiding power of a wet paint film is disclosed. The method includes admixing a wet paint and at least one transient colorant in an amount that is effective to increase the wet hiding power. The paint is then applied to a substrate. Suitable transient colorants must diminish in colour during or after the drying of the paint film containing the transient colorant.

## Description

The present invention relates to a method for increasing the hiding power of paint. More particularly, this invention is directed to a method for increasing the wet hiding power of a paint film by admixing a wet paint and an amount of at least one transient colorant effective to increase the hiding power, and, optionally, applying the admixture to a substrate.

Hiding power is a measure of the degree to which a pigmented coating or paint hides or obscures the surface of a substrate to which it has been applied. Wet hiding power is the hiding power of the paint in its wet state from the moment of application until the paint has dried. Many paints such as, for example, white and pastel interior wall paints, have poor wet hiding power. When a paint with poor wet hiding power is applied it appears to the painter that too thin a paint film has been applied, and that more paint is required. It is difficult to exceed the wet film thickness intrinsic in the paint and the method of application; attempts to do so may lead to runs and sags. And then, when the paint dries, as dry hiding is much higher than wet hiding, more paint than necessary will have been used.

Furthermore, poor wet hiding power and similar wet paint colour may make it difficult to judge which areas have been painted when a paint is being applied to a substrate previously painted with a similar colour.

Hiding power, or opacity, is the result of scattering of and/or absorption of visible light by the components in the paint film. The scattering of visible light in conventional coatings arises primarily from pigments of high refractive index such as, for example, titanium dioxide and zinc oxide. However, in many paints only low levels of scattering pigments are used, primarily for economic reasons. The absorption of visible light is due, primarily, to coloured pigments, coloured extenders, colorants, tinting agents, and the like. However, only low levels of visible light absorbers may be used in white and pastel paints by necessity, to avoid unwanted dark colours. Less than optimum light scattering and light absorption may each contribute to poor wet hiding power of a paint.

US-A-4954544 discloses an adhesive stick composition containing polyvinylpyrrolidone and additives which improve application characteristics and which undergo a colour change upon application to a substrate. Further disclosed is a soap gel-based polyvinylpyrrolidone adhesive which contains a coloured indicator additive making the adhesive visible by colour during the application and becoming colourless upon drying by exposure to air.

JP-A-60-170674 discloses a peelable film coating for electrical fans and kitchen appliances containing a basic substance and a colour developing indicator. Also disclosed is a peelable film coating containing a basic substance and a colour developing indicator so that coated and uncoated sections are readily distinguishable when applying the coating to improve the efficiency of the coating work while protecting the inherent appearance of the appliance when the coating dries to a film.

The present invention seeks to overcome the problems associated with wet paints. In particular, an object of the present invention is to provide a method for improving the hiding power of a wet paint film. Another object of the present invention is to provide a method for facilitating painting over a paint film of a similar colour by providing a paint with enhanced wet hiding power and transient, but different, colour.

According to the present invention there is provided a method for preparing a paint having increased wet hiding power comprising admixing a wet paint and at least one transient colorant in an amount effective to increase the wet hiding power; and optionally applying the resultant paint to a substrate.

Preferably, the amount of the transient colorant is from about 0.0001% to about 0.5%, by weight based on the weight of the wet paint.

Preferably, the amount of the transient colorant is from about 0.001% to about 0.1%, by weight based on the weight of the wet paint.

Preferably, the paint has a pH in the wet state that is different from its intrinsic pH and wherein the paint changes its pH on drying.

Preferably, the paint has a higher pH in the wet state than its intrinsic pH and wherein the pH of the paint decreases when the paint dries.

Preferably, the transient colorant is a photobleaching colorant and/or a pH-sensitive colorant.

Preferably, the transient colorant is selected from the group consisting of phenolphthalein, thymolphthalein, cresol red, o-cresolphthalein, fluorescein, aniline blue, toluidine blue, rhodamine B, Janus green B, Toluidine Blue O, Evans blue, Safranin O, rose bengal, ruthenium red, pararosaniline, and mixtures thereof.

Preferably, the paint comprises titanium dioxide in an amount of less than about 20 weight percent, based on the weight of wet paint.

Preferably, the substrate is an architectural substrate.

The method of this invention provides improved wet hiding power in paints, by the use of at least one transient colorant, without substantially affecting the final appearance of the dried coating.

None of the prior art references disclose a method for improving the wet hiding power of a paint film.

The present invention therefore provides a method for increasing the wet hiding power of a paint film, which includes admixing a wet paint and an amount of at least one transient colorant effective to increase said hiding power, and applying the admixture to a substrate, is provided. The transient colorant is selected to provide substantial visible colour, and thereby increase opacity or hiding power to the wet paint, but to contribute, at most, a minimal level of colour to the dried paint film.

This invention is directed to a method for increasing the wet hiding power of a paint film by admixing a wet paint and an amount of a transient colorant effective to increase said hiding power, and applying the admixture to a substrate.

The hiding power, or opacity, of a paint film may be judged visually by its ability to conceal the features of the substrate on which it is painted or by various methods known in the art. The method of judging hiding power used herein was the measurement of contrast ratio. Contrast ratio is the ratio of the reflectance of the surface of the paint film coated over a black substrate to the reflectance over a white substrate. A higher contrast ratio indicates higher opacity and higher hiding power.

The wet paint may be any pigmented architectural or industrial coating with a pigment volume concentration (PVC), i.e., the ratio of the volume of pigment to the volume of total non-volatile material, greater than about 20, as are well-known in the art. The wet paint contains at least one pigment and at least one water-insoluble polymeric binder. The pigment may include inorganic materials such as, for example, titanium dioxide, calcium carbonate, clay, and the like, as well as organic pigments such as, for example, polystyrene beads and aqueous dispersions of water-insoluble polymers which yield air-filled voids on drying of the coating composition. The water-insoluble polymeric binder may include polymers such as, for example, acrylic (co)polymer, vinyl acetate polymer, vinyl/acrylic copolymer, styrene/acrylic copolymer, ethylene/vinyl acetate copolymer, ethylene/vinyl chloride copolymer, and the like, and mixtures thereof. Preferred are paints wherein the water-insoluble polymeric binder is an emulsion-polymerized addition polymer.

Preferred for use in the method of this invention are wet paints which exhibit relatively poor wet hiding and which are to be used in applications which would benefit from higher wet hiding. More preferred are aqueous-based paints with deficient wet hiding such as, for example, white and pastel interior wall paints with a low content of pigments effective for scattering light, typically at a PVC greater than about 45%. Most preferred wet paints are aqueous-based paints with a titanium dioxide content of less than about 20% by weight, based on the weight of the wet paint; at titanium dioxide levels greater than about 20% by weight, wet hiding power is usually sufficiently high.

The paint may contain, in addition, other components such as, for example, emulsifiers, dispersants, curing agents, coalescents, wetting agents, biocides, thickeners, rheology modifiers, plasticizers, anti-foaming agents, other colorants, waxes, or anti-oxidants, and the like.

A transient colorant as defined herein is a composition such as, for example, a dye which substantially changes in colour during or after the drying of a paint film containing the transient colorant. The transient colorant in the wet paint film is effective to increase the wet hiding of the paint relative to the wet hiding of the paint film absent the transient colorant. The transient colorant in the dry paint film may contribute hiding or other beneficial properties in the dry film but must contribute, at most, a minimal level of colour to the dry, film. Preferred is an transient colorant which is strongly visible light-absorptive, i.e., deeply coloured, in the wet paint and which is colourless or white in the dry paint film. The transient colorant is used at a level from about 0.0001 % to about 0.5 %, by weight based on the weight of the wet paint. Preferred is a level from about 0.001 % to about 0.1 %, by weight based on the weight of the wet paint.

Suitable transient colorants useful in the invention must substantially diminish in effectiveness in contributing to the absorption of visible light, or to the production of colour, during or after the drying of a paint film containing the transient colorant. The agent causing the diminution of the light absorption may be external to the paint film or within the film.

An external agent may be present in the ambient atmosphere or on the substrate surface, whether naturally occurring or externally introduced. External agents include, for example, oxygen, carbon dioxide, water (in the case of solvent-borne paints), salts, lignins, and the like.

Agents within the film may result from a change in the composition of the film occasioned by the drying process itself such as, for example, a pH change or a change in the relative concentration of a complexation agent.

The mechanism by which the transient colorant substantially diminishes in its effectiveness in contributing to light absorption, or colour, during the drying of a paint film containing the transient colorant is not a limitation of this invention but may include mechanisms such as, for example, oxidation, dehydration, photobleaching, pH indicator effect, complexation, chemical reaction, and the like.

Examples of suitable transient colorants include, for example, phenolphthalein, thymolphthalein, cresol red, o-cresolphthalein, fluorescein, aniline blue, rhodamine B, Janus green B, Toluidine Blue O, Evans blue, Safranin O, rose bengal, ruthenium red, pararosaniline, and the like, and mixtures thereof.

In one preferred embodiment of this invention an aqueous paint is admixed with at least one pH indicator which substantially decreases in colour upon a change in paint pH occasioned by the drying of the paint film. The intrinsic pH of a paint herein is taken to be the pH of the wet paint absent a volatile acid or base. If a wet paint, either during the preparation of the paint or thereafter, has been adjusted to a pH greater than its intrinsic pH at least in part with a volatile amine such as, for example, ammonia, the pH of the wet paint film will drop, i.e., the wet paint film will become relatively more acidic, during the drying of the paint film and a pH-sensitive colorant, or indicator, which is coloured at a pH greater than the intrinsic pH of the wet paint and which is substantially less coloured or colourless at the intrinsic pH of the wet paint may be used. Suitable pH-sensitive colorants include, for example, phenolphthalein, thymolphthalein, cresol red, o-cresolphthalein, fluorescein, aniline blue, and the like, and mixtures thereof.

In another preferred embodiment of this invention an aqueous paint is admixed with at least one transient colorant which substantially decreases in colour upon drying of the paint film in air, the colour change believed to be due to photobleaching of the colorant. Suitable colorants include phenolphthalein, thymolphthalein, cresol red, o-cresolphthalein, fluorescein, aniline blue, rhodamine B, Janus green B, Toluidine Blue O, Evans blue, Safranin O, rose bengal, ruthenium red, pararosaniline, and the like, and mixtures thereof.

The method of this invention for improving the wet hiding of a paint film involves admixing a wet paint and at least one transient colorant, and applying the admixture to a substrate. The transient colorant may be dissolved or dispersed in the continuous phase of the paint. For example, when an aqueous or waterborne paint is used, the transient colorant may first be dissolved or dispersed in water or at least one water-miscible solvent, or mixtures thereof. A water-soluble dye is preferred. Admixing is easily accomplished with stirring or mechanical mixing.

The substrate to which the admixture of this invention may be applied includes wood, plastic, metal, cementitious substrates, and the like. Preferred are architectural substrates such as walls, ceilings, doors, window frames, and the like. The admixtures of this invention may be applied to a substrate by methods well known in the art of applying paint such as air-assisted spray, airless spray, brush, roller, and the like. A paint film so applied is typically from about 0.00025 cm to 0.0127 cm (about 0.1 mil to 5 mils) in thickness.

The present invention will now be illustrated only by way of examples.

### EXAMPLE 1. Improvement of wet hiding power.

To a stainless steel bucket were added the following ingredients (quantities are in grams):

| | |
|---|---|
| Water | 360.0 |
| Hydroxyethyl cellulose (NATROSOL 250 MR; 2.5%) | 840.0 |
| 2-aminomethylpropanol (AMP-95) | 9.03 |
| Ethylene glycol | 36.0 |
| Nonionic surfactant (TRITON N-57) | 12.0 |
| Defoamer (Colloid 643) | 6.0 |
| Titanium dioxide (TI-PURE R-900) | 149.7 |
| Clay filler (OPTIWHITE P) | 598.77 |
| Calcium carbonate (DURAMITE) | 598.77 |

[NATROSOL is a trade mark of Aqualon;TRITON is a trade mark of Union Carbide; COLLOID is a trade mark of Allied Colloids; TI-PURE is a trade mark of E.I. DuPont; OPTIWHITE is a trade mark of Burgess Pigment Co.; and DURAMITE is a trade mark of ECCA Calcium Products Inc.]

The above ingredients were ground for 15 minutes using a high shear COWLES mixer.

The following ingredients were added in the order given with low shear mixing.

| | |
|---|---|
| Polymeric binder (Amsco 3077) | 299.4 |
| Coalescent (TEXANOL -2,2,4-trimethyl-3-hydroxypentyl acetate) | 17.97 |
| Defoamer (Colloid 643) | 6.0 |
| Biocide (DOWONIL 75) | 1.5 |
| Aqueous Ammonia (28%) | 3.0 |
| Hydroxyethyl cellulose (NATRASOL 250 MR; 2.5%) | 172.8 |
| Water | 232.33 |

[AMSCO is now a trade mark of Rohm and Haas Company but was a trade mark of Unocal; TEXANOL is a trade mark of Eastman Kodak; COLLOID is a trade mark of Allied Colloids; DOWICIL is a trade mark of Dow; and NATROSOL is a trade mark of Aqualon.]

The resultant paint had a volume solids content of 27% and a pigment volume concentration (PVC) of 78 %.

To 100 grams of the above-described paint in a 0.946 litre (1/4 pint) plastic paint container were added 1.5 grams of 2-aminomethyl propanol (AMP-95), an amount of additive as noted in Table 1.1 below, and 1.0 grams of 28% aqueous ammonia.

Drawdowns were then made on Leneta 5C Opacity Charts with a 3 mil Bird drawdown bar. Reflectance readings were made with a Pacific Scientific Colorgard 45/0 Reflectometer as the paint film dried, beginning with the time of application of the wet paint film (t=0). Reflectance was measured over the paint applied to the white area and to the black area.

Contrast ratio, the ratio of the reflectance over a black substrate to the reflectance over a white substrate, was calculated and the results are presented in Tables 1.2 - 1.4

| **Table 1.1 Additive used in Sample 1-3** | | | |
|---|---|---|---|
| | Comparative A | Sample 1 | Sample 2 |
| Amount of additive | 1.6 g. | 1.6 g. | 0.33 g. |

| Additive Composition | | | |
|---|---|---|---|
| deionized water | 10.0 g. | 10.0 g. | 10.0 g. |
| 3A alcohol | 10.0 g. | 10.0 g. | 10.0 g. |
| phenolphthalein | 0 | 2.0 g. | 2.0 g. |
| thymolphthalein | 0 | 0 | 2.0 g. |

| **Table 1.2 Reflectances and constrast ratio for Comparative Sample A** | | | |
|---|---|---|---|
| Time | White Refl. | Black Refl. | Contrast Ratio |
| 0 | 84.4 | 66.5 | 0.788 |
| 15 min. | 84.2 | 68.7 | 0.816 |
| 30 min. | 84.9 | 71.1 | 0.837 |
| 1 hour | 85.2 | 72.0 | 0.845 |
| 2 hours | 85.5 | 73.2 | 0.856 |
| 3 hours | 85.7 | 74.1 | 0.865 |
| 4 hours | 85.8 | 74.0 | 0.863 |
| 30 hours | - | - | 0.868 |
| 7 days | - | - | 0.873 |

| **Table 1.3 Reflectances ans contrast ratio for Sample 1** | | | |
|---|---|---|---|
| Time | White Refl. | Black Refl. | Contrast Ratio |
| 0 | 72.5 | 49.7 | 0.868 |
| 15 min. | 79.7 | 69.3 | 0.870 |
| 30 min. | 81.6 | 71.3 | 0.874 |
| 1 hour | 82.6 | 72.6 | 0.879 |
| 2 hours | 84.0 | 73.9 | 0.880 |
| 3 hours | 84.9 | 74.7 | 0.880 |
| 4 hours | 85.0 | 74.9 | 0.881 |
| 30 hours | - | - | 0.884 |
| 7 days | - | - | 0.884 |

| **Table 1.4 Reflectances and contrast ratio for Sample 2** | | | |
|---|---|---|---|
| Time | White Refl. | Black Refl. | Contrast Ratio |
| 0 | 57.1 | 51.7 | 0.905 |
| 15 min. | 81.0 | 68.6 | 0.847 |
| 30 min. | 83.2 | 71.3 | 0.857 |
| 1 hour | 84.6 | 72.7 | 0.859 |
| 2 jours | 85.4 | 73.6 | 0.862 |
| 3 hours | 85.6 | 74.2 | 0.867 |
| 4 hours | 85.9 | 74.3 | 0.865 |
| 30 hours | - | - | 0.869 |
| 7 days | - | - | 0.875 |

Samples 1 and 2 of this invention exhibit a higher contrast ratio, i.e., higher opacity and higher hiding power, in the wet film and during the early drying stages relative to Comparative Sample A which does not contain a transient colorant.

### EXAMPLE 2. Improvement of wet hiding power at various wavelengths with various transient colorants.

To a metal can were added the following ingredients (quantities are in grams):

| | |
|---|---|
| Water | 120.0 |
| Hydroxyethyl cellulose (NATROSOL 250 MHR; 2.5%) | 280.0 |
| 2-aminomethylpropanol (AMP-95) | 3.01 |
| Propylene glycol | 18.0 |
| Nonionic surfactant (TRITON N-57) | 2.0 |
| Defoamer (Colloid 643) | 2.0 |
| Titanium dioxide (TI-PURE R-900) | 49.93 |
| Clay filler (OPTIWHITE P) | 199.58 |
| Calcium carbonate (DURAMITE) | 199.58 |

[NATROSOL is a trade mark of Aqualon;TRITON is a trade mark of Union Carbide; COLLOID is a trade mark of Allied Colloids; TI-PURE is a trade mark of E.I. DuPont; OPTIWHITE is a trade mark of Burgess Pigment Co.; and DURAMITE is a trade mark of ECCA Calcium Products Inc.]

The above ingredients were ground for 15 minutes using a high shear COWLES mixer. The following ingredients were added in the order given with low shear mixing.

| | |
|---|---|
| Polymeric binder (acrylic latex; 55% solids) | 100.09 |
| Coalescent (TEXANOL - 2,2,4-trimethyl-3-hydroxypentyl acetate) | 6.0 |
| Defoamer (Colloid 643) | 2.0 |
| Biocide (KATHON LX) | 1.84 |
| Aqueous Ammonia (28%) | 1.0 |
| Hydroxyethyl cellulose (NATROSOL 250 MHR; 2..5%) | 57.82 |
| Water | 70.39 |

mark of Eastman Kodak; COLLOID is a trade mark of Allied Colloids; and NATROSOL is a trade mark of Aqualon.]

The resultant paint had a volume solids content of 27% and a pigment volume concentration (PVC) of 79 %.

For the preparation of Samples 3-10, to 100 g. of the resultant paint was added the amount of water soluble transient colorant which is listed in Table 2.1 as a dry powder and the paint stirred by hand for 5 minutes.

The paints were drawndown with a 3 mil Bird Bar on a Leneta 5C Opacity Chart. A mask was immediatelly put over the wet drawdown. The mask was another drawdown chart with holes cut to approximate the viewing opening of the spectrophotometer used in the measurements. A Lab Scan II 8 degree sphere spectrophotometer was used. The following parameters were set: 10 degree observer, illuminant C, large area view, and specular component excluded. The instrument was completely calibrated prior to each set of readings. Data were recorded at 100 nanometre intervals in the visible spectrum from 400-700 nanometres over the black and white portions of the chart, the ratio of which is the wet contrast, which was used as a measure of wet hiding. The data are presented in Table 2.2. The paints were allowed to dry under room fluorescent lighting ; samples 3-10 faded overnight.

| **Table 2.1 Transient colorant used in Samples 3-10** | | |
|---|---|---|
| Sample | Transient Colorant | Amount added (milligrams) |
| 3 | Toluidine Blue O | 1.9 |
| 4 | Aniline Blue | 3.0 |
| 5 | Janus Green B | 1.0 |
| 6 | Evans Blue | 0.75 |
| 7 | Safranin O | 3.0 |
| 8 | Rose Bengal | 1.8 |
| 9 | Ruthenium Red | 5.2 |
| 10 | Pararosaniline | 2.1 |
| Comparative B | None | 0 |

The levels used were selected for adding to paint by targeting for a "pastel" shade in the wet paint.

| **Table 2.2 Reflectances and contrast ratios for Samples 3-10 at various** **wavelengths (λ).** | | | | |
|---|---|---|---|---|
| Sample | λ(nm.) | Withe Refl. | Black Refl. | Contrast Ratio |
| 3 | 400 | 43.0 | 42.8 | 0.995 |
| | 500 | 77.4 | 72.0 | 0.930 |
| | 600 | 78.0 | 70.7 | 0.906 |
| | 700 | 86.5 | 71.0 | 0.821 |
| 4 | 400 | 43.1 | 42.8 | 0.993 |
| | 500 | 81.2 | 75.0 | 0.924 |
| | 600 | 83.5 | 74.4 | 0.891 |
| | 700 | 87.5 | 72.3 | 0.826 |
| 5 | 400 | 42.7 | 42.4 | 0.993 |
| | 500 | 80.5 | 74.6 | 0.927 |
| | 600 | 79.9 | 72.5 | 0.907 |
| | 700 | 83.5 | 70.8 | 0.848 |
| 6 | 400 | 42.5 | 42.3 | 0.995 |
| | 500 | 80.0 | 74.5 | 0.931 |
| | 600 | 77.5 | 71.2 | 0.919 |
| | 700 | 87.3 | 72.4 | 0.829 |
| 7 | 400 | 42.6 | 42.5 | 0.998 |
| | 500 | 69.6 | 66.8 | 0.960 |
| | 600 | 85.4 | 74.7 | 0.875 |
| | 700 | 87.7 | 71.3 | 0.813 |
| 8 | 400 | 42.8 | 42.4 | 0.991 |
| | 500 | 80.1 | 73.9 | 0.923 |
| | 600 | 84.7 | 74.5 | 0.880 |
| | 700 | 87.6 | 71.7 | 0.818 |
| 9 | 400 | 42.6 | 42.5 | 0.998 |
| | 500 | 78.3 | 73.2 | 0.935 |
| | 600 | 82.8 | 73.9 | 0.893 |
| | 700 | 86.9 | 71.8 | 0.826 |
| 10 | 400 | 42.6 | 42.3 | 0.993 |
| | 500 | 77.8 | 72.2 | 0.928 |
| | 600 | 83.6 | 73.6 | 0.880 |
| | 700 | 87.3 | 71.1 | 0.814 |
| Comp. B | 400 | 42.3 | 42.1 | 0.995 |
| | 500 | 81.0 | 74.2 | 0.916 |
| | 600 | 83.9 | 73.8 | 0.880 |
| | 700 | 87.3 | 71.4 | 0.818 |

Samples 3-10 of this invention all exhibited an increase in wet contrast ratio at least one wavelength, relative to Comparative B. Samples 3-10 did not provide a wet paint film with good visual wet hiding, however, because they did not provide improved wet hiding over a sufficiently broad fraction of the visible light spectrum.

### EXAMPLE 3. Improvement in wet hiding power using mixtures of transient colorants.

Samples 11-13 were prepared by adding the colorant mixtures listed in Table 3.1 to 100 grams of paint, the preparation of which was described in Example 2. Samples 11-13 were drawndown with a 0.0076 cm (3 mil) Bird Bar side-by-side with Comparative B and wet hiding was measured as in Example 1. The results of reflectance measurements and calculated contrast ratios are presented in Table 3.2-3.4.

| **Table 3.1 Transient colorants used in Samples 11-13** | | |
|---|---|---|
| Sample | Transient Colorants | Amount added(milligrams) |
| 11 | Fluorescein | 15.4 |
| | Aniline Blue | 13.2 |
| | Toluidine Blue | 1.1 |
| | Rhodamine B | 0.9 |
| | Janus Green B | 0.7 |
| 12 | Fluorescein | 7.7 |
| | Aniline Blue | 6.6 |
| | Toluidine Blue | 0.55 |
| | Rhodamine B | 0.45 |
| | Janus Green B | 1.3 |
| 13 | Fluorescein | 20.5 |
| | Aniline Blue | 21.9 |
| | Toluidine BLue | 2.4 |
| | Janus Green B | 2.3 |
| Comparative B | None | 0 |

| **Table 3.2 Reflectances and contrast ratios for Sample 11 at various** **wavelengths (λ).** | | | | |
|---|---|---|---|---|
| Sample | λ(nm.) | White Refl. | Black Refl. | Contrast Ratio |
| 11 | 400 | 40.7 | 40.0 | 0.982 |
| | 500 | 46.7 | 45.6 | 0.976 |
| | 600 | 76.1 | 63.8 | 0.838 |
| | 700 | 82.5 | 60.8 | 0.737 |
| Comp. B | 400 | 41.7 | 40.4 | 0.969 |
| | 500 | 79.9 | 66.4 | 0.831 |
| | 600 | 82.6 | 64.3 | 0.778 |
| | 700 | 86.7 | 60.8 | 0.701 |
| 12 | 400 | 41.7 | 41.5 | 0.995 |
| | 500 | 52.1 | 51.5 | 0.988 |
| | 600 | 74.3 | 69.1 | 0.930 |
| | 700 | 79.4 | 68.4 | 0.861 |
| Comp. B | 400 | 42.4 | 42.0 | 0.991 |
| | 500 | 81.8 | 74.2 | 0.907 |
| | 600 | 84.5 | 73.8 | 0.873 |
| | 700 | 87.9 | 71.4 | 0.812 |
| 13 | 400 | 40.8 | 40.7 | 0.998 |
| | 500 | 46.0 | 46.0 | 1.000 |
| | 600 | 70.3 | 66.7 | 0.949 |
| | 700 | 78.2 | 68.0 | 0.870 |
| Comp.B | 400 | 42.7 | 42.4 | 0.993 |
| | 500 | 82.3 | 74.6 | 0.906 |
| | 600 | 85.0 | 74.3 | 0.874 |
| | 700 | 88.4 | 71.8 | 0.812 |

Samples 11-13 of this invention all exhibit increased contrast ratio, i.e., wet hiding power, relative to Comparative B at all tested wavelengths; in addition, they all exhibited improved visual wet hiding relative to Comparative B.

## Claims

1. A method of preparing a paint having increased wet hiding power comprising admixing a wet paint and at least one transient colorant in an amount effective to increase the wet hiding power; and, optionally, applying the resultant paint to a substrate.

2. A method according to claim 1 wherein the amount of the transient colorant is from about 0.0001 % to about 0.5%, by weight based on the weight of the wet paint.

3. A method according to claim 1 or claim 2 wherein the amount of the transient colorant is from about 0.001% to about 0.1%, by weight based on the weight of the wet paint.

4. A method according to any one of the preceding claims wherein the paint has a pH in the wet state that is different from its intrinsic pH and wherein the paint changes its pH on drying.

5. A method according to any one of the preceding claims wherein the paint has a higher pH in the wet state than its intrinsic pH and wherein the pH of the paint decreases when the paint dries.

6. A method according to any one of the preceding claims wherein the transient colorant is a photobleaching colorant and/or a pH-sensitive colorant.

7. A method according to any one of the preceding claims wherein the transient colorant is selected from the group consisting of phenolphthalein, thymolphthalein, cresol red, o-cresolphthalein, fluorescein, aniline blue, toluidine blue, rhodamine B, janus green B, Toluidine Blue O, Evans blue, Safranin O, rose bengal, ruthenium red, pararosaniline, and mixtures thereof.
